# EUROPÄISCHE PATENTSCHRIFT

(11) **EP 2 612 116 B1**
(45) Veröffentlichungstag und Bekanntmachung des Hinweises auf die Patenterteilung: **16.12.2020**
(21) Anmeldenummer: 11743513.1
(22) Anmeldetag: 09.08.2011
(51) Int. Cl.: G01F 23/296, G01N 9/00, G01N 11/16, G01N 29/036, G01N 29/02

(54) **VIBRONISCHES MESSGERÄT**
VIBRONIC MEASURING DEVICE
APPAREIL DE MESURE VIBRONIQUE

(30) Priorität: 03.09.2010 DE 102010040219
(43) Veröffentlichungstag der Anmeldung: 10.07.2013
(73) Patentinhaber: Endress+Hauser SE+Co. KG, 79689 Maulburg (DE)
(72) Erfinder: URBAN, Martin, 79541 Lörrach (DE); BRENGARTNER, Tobias, 79111 Freiburg (DE); MÜLLER, Alexander, 79361 Sasbach-Jechtingen (DE)
(74) Vertreter: Andres, Angelika Maria
(86) Internationale Anmeldenummer: PCT/EP2011/063650
(87) Internationale Veröffentlichungsnummer: WO 2012/028426

(56) Entgegenhaltungen:
- EP-A1- 1 580 539
- WO-A1-98/19139
- WO-A1-03/050479
- DE-A1- 10 161 071
- DE-A1- 10 237 931
- DE-A1-102004 018 506
- DE-A1-102005 020 862
- DE-A1-102007 008 669
- US-A1- 2004 035 208
- US-B1- 6 425 293

## Beschreibung

Die vorliegende Erfindung betrifft ein vibronisches Messgerät zur Bestimmung mindestens einer Prozessgröße eines Mediums, mit einer schwingfähigen Einheit, mit einer Sende-/Empfangseinheit, welche die schwingfähige Einheit mittels eines Sendesignals zu mechanischen Schwingungen anregt und die mechanischen Schwingungen empfängt und in ein analoges elektrisches Empfangssignal umwandelt, und mit einer Regel-/Auswerteeinheit, welche das analoge Empfangssignal empfängt, digitalisiert und daraus die Prozessgröße bestimmt und welche das Sendesignal erzeugt. Bei der Prozessgröße handelt es sich um einen vorgegebenen Füllstand des Mediums in einem Behälter und/oder die Dichte und/oder die Viskosität des Mediums. Die schwingfähige Einheit ist bevorzugt eine Schwinggabel, kann aber gleichermaßen eine Membran oder ein Einstab sein.

Vibronische Messgeräte zur Bestimmung eines Füllstands, der Dichte, und/oder der Viskosität eines Mediums sind in Form von Schwinggabeln, Membranschwingern und Einstäben bekannt. Diesen vibronischen Messgeräten ist gemein, dass sie eine schwingfähige Einheit besitzen, welche zu resonanten Schwingungen angeregt wird. Die Anregung erfolgt meist über piezoelektrische Elemente. Antriebselemente und schwingfähige Einheit bilden zusammen die Sensoreinheit. Die mechanischen Schwingungen werden in elektrische Empfangssignale umgewandelt und deren Frequenz, Amplitude, und/oder Phasenverschiebung relativ zum Anregesignal ausgewertet. Dies geschieht vorteilhafterweise digital in einem Mikrocontroller, dem das Empfangssignal über einen Analog-Digitalwandler zugeführt wird. Das Anregesignal kann mit einer vorgegebenen Phasenverschiebung relativ zum Empfangssignal ebenfalls im Mikrocontroller erzeugt werden und beispielsweise über einen Digital-Analogwandler den Antriebselementen der schwingfähigen Einheit zugeführt werden. In Abhängigkeit der Dämpfung der Schwingungen der schwingfähigen Einheit variiert die Amplitude des Empfangssignals. Die Sensoreinheit vibronischer Messgeräte besitzt daher in der Regel eine sehr hohe Dynamik. Der Analog-Digitalwandler muss eine entsprechend hohe Auflösung besitzen, um alle Signale digitalisieren zu können. Die Auflösung von in Mikrocontrollern integrierten Analog-Digital-Wandlern ist jedoch begrenzt und für eine derart hohe Dynamik unzureichend, sodass der Bereich, in welchem das Messgerät die Prozessgröße zuverlässig bestimmen kann, eingeschränkt ist.

EP 1 580 539 A1, WO 98/19139 A1, US 2004/035208 A1, DE 10 2004 018506 A1, DE 10 2007 008669 A1, DE 10 2005 020862 A1, DE 101 61 071 A1 beschreiben einige Beispiele von vibronischen Messgeräten.

Die Aufgabe der Erfindung besteht daher darin, ein vibronisches Messgerät bereit zu stellen, welches gegenüber bekannten vibronischen Messgeräten einen erweiterten Messbereich aufweist.

Die Aufgabe wird dadurch gelöst, dass zwischen der Sende-/Empfangseinheit und der Regel-/Auswerteeinheit ein regelbarer Verstärker angeordnet ist, welcher das Empfangssignal empfängt und ein angepasstes Empfangssignal erzeugt, und dass die Regel-/Auswerteeinheit eine Amplitude des Empfangssignals bestimmt und in Abhängigkeit der bestimmten Amplitude den Verstärker derart regelt, dass die Amplitude des angepassten Empfangssignals an einen von der Regel-/Auswerteeinheit vorgegebenen digitalisierbaren Spannungsbereich angepasst ist. Der regelbare Verstärker, welcher in den Pfad des Empfangssignals eingebracht ist, führt dazu, dass die Dynamik der Sensoreinheit zumindest teilweise kompensiert wird. Bevorzugt ist der regelbare Verstärker unmittelbar auf die Sende-/Empfangseinheit folgend angeordnet. Durch die Amplitudenregelung des Empfangssignals wird erreicht, dass die Streuung der Amplituden des Eingangssignals der Regel-/Auswerteeinheit geringer ist. Der Verstärkungsfaktor kann hierbei größer, gleich oder kleiner als eins sein. Im Folgenden kann unter Verstärkung somit auch eine Dämpfung zu verstehen sein. Durch die Anpassung der Amplitude des Empfangssignals an den von der Ausgestaltung der Regel-/Auswerteeinheit abhängigen digitalisierbaren Spannungsbereich wird sichergestellt, dass das Signal der schwingfähigen Einheit digitalisierbar ist. Bevorzugt bestimmt die Regel-/Auswerteeinheit zur Regelung die Amplitude des ihr zugeführten angepassten Empfangssignals.

Ein weiterer vorteilhafter Effekt wird bei hoher Dämpfung und somit sehr niedrigen Amplituden des Empfangssignals erzielt. Durch die Verstärkung des Signals bereits vor dem Filtern wird das Verhältnis von Signal zu Rauschen im gefilterten Empfangssignal stark verbessert, sodass auch bei diesen extremen Bedingungen noch eine zuverlässige Bestimmung der Prozessgrößen möglich ist. Bei herkömmlichen Messgeräten ist das Signal in hochviskosen Medien auf Grund der starken Dämpfung sehr niedrig, sodass eingekoppelte Störungen die Messung erschweren oder gar verbieten. Durch die Verstärkung sind nach dem Filter eingekoppelte Störsignale vernachlässigbar.

Zusätzlich kann die Sendespannung entweder durch einen Digital-Analog-Wandler oder durch einen Verstärker so eingestellt werden, dass es dem Verstärker im Empfangspfad möglich ist, den Bereich eines den Signaleingang der Regel-/Auswerteeinheit bildenden Analog-Digital-Wandlers optimal auszunutzen.

In einer Ausgestaltung des Messgeräts ist die Regel-/Auswerteeinheit ein Mikrocontroller, welcher das angepasste Empfangssignal über einen Analog-Digital-Wandler empfängt. Der Mikrocontroller bestimmt die aktuelle Amplitude des Empfangssignals und stellt die Verstärkung des regelbaren Verstärkers so ein, dass das Empfangssignal von dem Analog-Digital-Wandler digitalisierbar ist. Der Verstärkungsfaktor ist größer als eins, wenn die Schwingungen stark gedämpft werden, und kleiner als eins, wenn Störsignale einkoppeln, welche den digitalisierbaren Spannungsbereich überschreiten würden. Je besser die Amplitude des verstärkten Empfangssignals an die Referenzspannung des Analog-Digital-Wandlers angepasst ist, desto besser ist dessen Auflösung ausnutzbar und desto größer ist die Bandbreite an auswertbaren Empfangssignalen und somit der Messbereich. In einer Ausgestaltung erfolgt die Regelung derart, dass das an den digitalisierbaren Spannungsbereich angepasste Empfangssignal eine im Wesentlichen konstante Amplitude aufweist.

Durch die an Regel-/Auswerteeinheit angepasste Verstärkung des Empfangssignals unmittelbar hinter der Sende-/Empfangseinheit reicht eine geringe Auflösung des Analog-Digital-Wandlers aus, um die Empfangssignale zu digitalisieren.

Gemäß einer Ausgestaltung der Erfindung ist zwischen dem regelbaren Verstärker und der Regel-/Auswerteeinheit ein Filterelement, insbesondere ein Bandpass, angeordnet. Dieser filtert das Nutzsignal aus dem angepassten Empfangssignal heraus.

In einer Ausgestaltung umfasst die Regel-/Auswerteeinheit einen Digital-Analog-Wandler, welcher der Sende-/Empfangseinheit das Sendesignal zuführt.

Hiermit verbunden ist eine Ausgestaltung, in welcher zwischen dem Digital-Analog-Wandler und der Sende-/Empfangseinheit ein Verstärker mit fest eingestelltem Verstärkungsfaktor angeordnet ist, welcher das Sendesignal verstärkt. Der Verstärker ermöglicht eine breitere Amplitudenvariation.

Eine weitere Ausgestaltung sieht vor, dass die Regel-/Auswerteeinheit die Amplitude des Sendesignals in Abhängigkeit der Amplitude des Empfangssignals derart regelt, dass die Amplitude des Empfangssignals an den digitalisierbaren Spannungsbereich anpassbar ist. Die Regelung der Sendespannung richtet sich nach der erreichbaren Verstärkung des regelbaren Verstärkers im Empfangspfad und nach der Referenzspannung des Analog-Digital-Wandlers. Beispielsweise wird die Amplitude des Sendesignals halbiert oder verdoppelt, falls die Auswertung der Empfangsamplitude ergibt, dass eine Anpassung an den digitalisierbaren Bereich nicht möglich ist.

Eine Ausgestaltung der Erfindung sieht vor, dass ein zweiter regelbarer Verstärker zwischen einem Signalausgang der Regel-/Auswerteeinheit für das Sendesignal und der Sende-/Empfangseinheit angeordnet ist, und dass die Regel-/Auswerteeinheit den zweiten regelbaren Verstärker in Abhängigkeit der Amplitude des Empfangssignals derart regelt, dass die Amplitude des Empfangssignals durch den ersten Verstärker an den digitalisierbaren Spannungsbereich anpassbar ist. Diese Ausgestaltung betrifft insbesondere den Fall, dass das Sendesignal nicht über einen Digital-Analog-Wandler ausgegeben wird, da dieser ebenfalls zur Regelung der Amplitude des Sendesignals geeignet ist. Durch die Amplitudenregelung im Sendepfad wird die Amplitudenregelung im Empfangspfad optimiert, da die Sendespannung entweder durch einen Digital-Analog-Wandler oder durch einen zweiten regelbaren Verstärker so einstellbar ist, dass es dem regelbaren Verstärker im Empfangspfad möglich ist, den Bereich des Analog-Digital-Wandlers optimal auszunutzen. Beispielsweise wird die Amplitude des Sendesignals stets derart eingestellt, dass der regelbare Verstärker im Empfangspfad in der Mitte seines Bereichs liegt. Alternativ erfolgt eine Erhöhung der Sendespannung erst dann, wenn die Amplitude des Empfangssignals auch nach maximaler Verstärkung zu gering ist, um ausgewertet zu werden oder wenn das angepasste Empfangssignal den Analog-Digital-Wandler der Regel-/Auswerteeinheit nicht optimal ansteuern kann.

In einer Ausgestaltung der Erfindung handelt es sich bei der schwingfähigen Einheit um eine Schwinggabel. In alternativen Ausgestaltungen handelt es sich bei der schwingfähigen Einheit um eine Membran oder um einen Einstab. Bei der Prozessgröße handelt es sich um einen vorbestimmten Füllstand des Mediums in einem Behälter und/oder die Dichte und/oder die Viskosität des Mediums.

Die Erfindung wird anhand der nachfolgenden Figuren näher erläutert.
- Fig. 1: zeigt den schematischen Aufbau einer ersten Ausgestaltung eines Regelkreises mit Amplitudenregelung;
- Fig. 2: zeigt den schematischen Aufbau einer zweiten Ausgestaltung eines Regelkreises mit Amplitudenregelung.

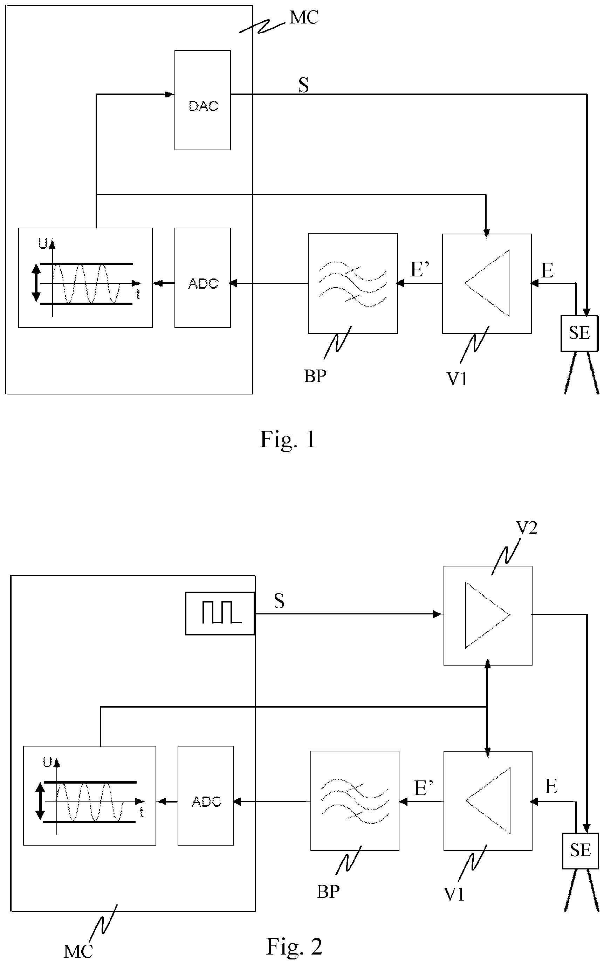

In Fig. 1 sind schematisch die Komponenten eines Regelkreises eines vibronischen Messgeräts dargestellt. Die Sende-/Empfangseinheit SE regt die schwingfähige Einheit zu mechanischen Schwingungen an und empfängt deren Schwingungen. Die Sende-/Empfangseinheit SE ist mit der schwingfähigen Einheit - hier durch eine Schwinggabel angedeutet - verbunden und bildet zusammen mit dieser die Sensoreinheit des Messgeräts. Bevorzugt handelt es sich bei der Sende-/Empfangseinheit SE um einen piezoelektrischen Wandler, welcher elektrische Signale in mechanische Signale umwandelt und umgekehrt. In anderen Ausgestaltungen kann es sich bei der Sende-/Empfangseinheit SE aber auch um elektromagnetische oder magnetostriktive Elemente handeln.

Der Sende-/Empfangseinheit SE wird ein Sendesignal S in Form einer Wechselspannung zugeführt. Die mechanischen Schwingungen der schwingfähigen Einheit erzeugen in der Sende-/Empfangseinheit SE ein elektrisches Empfangssignal E, dessen Amplitude, Frequenz und Phasenverschiebung relativ zum Sendesignal von den Eigenschaften des Mediums, in welchem die Schwingung erfolgt, abhängen. Die Auswertung des Empfangssignals E in Bezug auf die zu bestimmende Prozessgröße erfolgt in der Regel-/Auswerteeinheit MC.

Der dargestellte Empfangszweig unterscheidet sich von einem für vibronische Messgeräte mit digitaler Regelung üblichen Empfangszweig durch einen zusätzlich eingebrachten regelbaren Verstärker V1. Hinter dem regelbaren Verstärker V1 ist ein Filterelement BP angeordnet, bei welchem es sich bevorzugt um ein Bandpassfilter handelt. Das mit einem einstellbaren Verstärkungsfaktor verstärkte und gefilterte Empfangssignal E' ist einem Mikrocontroller MC zugeführt, welcher als Regel-/Auswerteeinheit fungiert. Der Mikrocontroller MC weist eingangsseitig einen Analog-Digital-Wandler ADC und ausgangsseitig einen Digital-Analog-Wandler DAC auf. Der Analog-Digital-Wandler ADC empfängt das verstärkte und gefilterte Empfangssignal E' und wandelt es in ein digitales Signal um.

Der Mikrocontroller MC wertet das digitale Empfangssignal zum einen zur Bestimmung der Prozessgröße, d.h. des Erreichens des vorbestimmten Füllstands, der Dichte, und/oder der Viskosität aus. Zum anderen bestimmt er die Amplitude des Empfangssignals E bzw. des ihm zugeführten angepassten Empfangssignals E' und erzeugt darauf hin ein Regelsignal zur Einstellung des Verstärkungsgrads des Verstärkers V1, welches er dem Verstärker V1 zuführt. Die Verstärkung des Empfangssignals E ist derart geregelt, dass eine Dynamik der Amplitude des von der Sensoreinheit erhaltenen Empfangssignals E zumindest so stark kompensiert wird, dass die Auflösung des Analog-Digital-Wandlers ADC zur Digitalisierung aller auftretenden Empfangssignale E ausreicht. In einer vorteilhaften Ausgestaltung ist die Regelung derart eingestellt, dass die Amplitude des aus dem Verstärker V1 gelangenden Empfangssignals E' konstant ist. Durch die Anpassung der Amplitude des Empfangssignals E an den digitalisierbaren Spannungsbereich des Mikrocontrollers MC erhält der Mikrocontroller MC auch bei der Messung in hochviskosen Medien, welche die Schwingungen der schwingfähigen Einheit stark dämpfen, ein zur Auswertung in Bezug auf die Prozessgröße ausreichend hohes Signal. Darüber hinaus ist durch die Anordnung des Verstärkers V1 vor dem Filterelement BP das Verhältnis von Signal zu Rauschen in dem gefilterten Empfangssignal E', welches dem Mikrocontroller MC zugeführt wird, verbessert. Bevorzugt bestimmt der Mikrocontroller MC die aktuelle Amplitude des ihm zugeführten Empfangssignals E', indem er das Empfangssignal E' zu vorgegebenen Zeitpunkten abtastet. Die Zeitpunkte sind derart gewählt, dass das Empfangssignal E' bei Erfüllen einer vorgegebenen Phasenbeziehung relativ zum Sendesignal Extrema oder Nullstellen aufweist. Das phasenselektive Abtasten ist in der bislang noch nicht veröffentlichten deutschen Patentanmeldung mit dem Aktenzeichen 102009028022.7 beschrieben.

Weiterhin erzeugt der Mikrocontroller MC das Sendesignal S in Abhängigkeit des Empfangssignals E. Um die schwingfähige Einheit zu Schwingungen anzuregen wird sie mit einem Sendesignal S beaufschlagt, welches eine vorgegebene Phasenverschiebung zum Empfangssignal E aufweist. In der Regel sind dies 90°. In der bislang noch nicht veröffentlichten deutschen Patentanmeldung mit dem Aktenzeichen 102010030982.6 ist ein vorteilhaftes Verfahren zur Regelung der Phasenverschiebung zwischen Sendesignal S und Empfangssignal E auf einen vorgegebenen Wert beschrieben. Das Empfangssignal E wird hierzu wie bei oben genanntem Verfahren zu Zeitpunkten abgetastet, zu welchen das Empfangssignal E bei Vorliegen der vorgegebenen Phasenverschiebung einen Extremwert annimmt oder einen Nulldurchgang aufweist. Stimmt die Phasenverschiebung nicht mit der vorgegebenen überein, weichen die abgetasteten Spannungswerte des Empfangssignals E von den Sollwerten ab. Ist dies der Fall, wird die mit der Phasenverschiebung korrelierte Sendefrequenz entsprechend der Abweichung nachgeregelt. Das erfindungsgemäße Messgerät ermöglicht eine optimierte Durchführung der Phasenregelung. Ist die Amplitude des Empfangssignals E nicht konstant, sollte die Amplitude ständig gemessen werden, damit bei einer Abweichung des abgetasteten Spannungswerts vom Sollwert die erforderliche Korrektur ermittelt werden kann. Dies ist darin begründet, dass die Höhe der Abweichung des abgetasteten Spannungswerts vom Sollwert sowohl von der vorliegenden Phasenverschiebung als auch von der Amplitude des Empfangssignals E abhängt, sodass daraus ohne Kenntnis der Amplitude die vorliegende Phasenverschiebung nicht erkennbar ist. Bei einer zunehmenden Dämpfung durch das Medium hat dies zur Folge, dass die Phase zu schwach nachgeregelt wird, d.h. die Phasenregelung zu langsam ist. Bei einer konstanten Amplitude entfällt diese Dämpfungsabhängigkeit der Phasenregelung. Die Amplitudenregelung mit Hilfe des regelbaren Verstärkers V1 ermöglicht somit auch bei stark dämpfenden Medien eine Phasenregelung mit ausreichend hoher Geschwindigkeit.

Der Mikrocontroller MC gibt das Sendesignal S über den Digital-Analog-Wandler DAC aus. Der Digital-Analog-Wandler DAC ermöglicht es, die Amplitude des Sendesignals S zu variieren. Bevorzugt erfolgt die Amplitudenregelung des Sendesignals S derart, dass das als Reaktion der schwingfähigen Einheit auf das Sendesignal S entstehende Empfangssignal E eine Amplitude aufweist, die optimal an den ersten regelbaren Verstärker V1 angepasst ist. Der regelbare Verstärker V1 kann dann ein angepasstes Empfangssignal E' erzeugen, welches den Bereich des Analog-Digital-Wandlers ADC im Idealfall voll ansteuert. Beispielsweise ist die Sendespannung so geregelt, dass der Verstärker das angepasste Empfangssignal bei einem mittleren Verstärkungsfaktor derart erzeugt, dass die Höhe des angepassten Empfangssignals ungefähr mit der Höhe der Referenzspannung des Analog-Digital-Wandlers übereinstimmt. In Abhängigkeit der Ausgestaltung des Digital-Analog-Wandlers DAC kann es hierzu erforderlich sein, einen Verstärker AMP im Sendezweig anzuordnen, welcher das Sendesignal S verstärkt, bevor er es der Sende-/Empfangseinheit SE zuführt. Dieser Verstärker AMP besitzt einen fest vorgegebenen Verstärkungsfaktor. Ein zumindest annähernd voll angesteuerter Analog-Digital-Wandler ADC ist insbesondere im Zusammenhang mit oben beschriebener Regelung der Phasenverschiebung über die Detektion von Abweichungen im Nulldurchgang vorteilhaft. Durch die hohe Empfangsspannung und die hierdurch erzielte hohe Auflösung sind auch eventuell auftretende Abweichungen im Nulldurchgang gut aufgelöst, was eine schnelle Regelung ermöglicht.

Fig. 2 offenbart eine alternative Ausgestaltung des Regelkreises. Im Gegensatz zu dem in der Fig. 1 dargestellten Mikrocontroller MC enthält der hier eingesetzte Mikrocontroller MC keinen Digital-Analog-Wandler DAC. Das rechteckförmige oder sinusförmige Sendesignal S wird mit konstanter Höhe aus einem Port ausgegeben und dann einem zweiten regelbaren Verstärker V2 zugeführt. Die Amplitudenanpassung des Sendesignals S an die von der aktuell vorliegenden Dämpfung abhängigen Amplitude des Empfangssignals E erfolgt nun außerhalb des Mikrocontrollers MC mittels des regelbaren Verstärkers V2. Die Regelsignale der beiden Verstärker V1 und V2 können hierbei über denselben Bus übertragen werden.

Der Empfangszweig unterscheidet sich nicht von dem in der Fig. 1 dargestellten Empfangszweig.

### Bezugszeichenliste

- SE: Sende-/Empfangseinheit
- V1: (erster) regelbarer Verstärker
- V2: zweiter regelbarer Verstärker
- MC: Mikrocontroller
- ADC: Analog-Digital-Wandler
- DAC: Digital-Analog-Wandler
- BP: Filterelement
- AMP: Verstärker
- S: Sendesignal
- E: Empfangssignal
- E': Angepasstes Empfangssignal

## Patentansprüche

1. Vibronisches Messgerät zur Bestimmung mindestens einer Prozessgröße eines Mediums,
mit einer schwingfähigen Einheit,
mit einer Sende-/Empfangseinheit (SE) zum Anregen von mechanischen Schwingungen der schwingfähigen Einheit mittels eines Sendesignals (S) und zum Empfangen der mechanischen Schwingungen und zum Umwandeln der mechanischen Schwingungen in ein analoges elektrisches Empfangssignal (E), und
mit einer Regel-/Auswerteeinheit (MC) zum Empfangen und Digitalisieren des analogen Empfangssignals (E) und zum Bestimmen der Prozessgröße aus dem analogen Empfangssignal (E), und zum Erzeugen des Sendesignals (S),
**dadurch gekennzeichnet,**
**dass** zwischen der Sende-/Empfangseinheit (SE) und der Regel-/Auswerteeinheit (MC) ein regelbarer Verstärker (V1) zum Empfangen des Empfangssignals (E) und zum Erzeugen eines angepassten Empfangssignals (E') angeordnet ist,
wobei die Regel-/Auswerteeinheit (MC) ausgestaltet ist, um eine Amplitude des Empfangssignals (E) zu bestimmen und in Abhängigkeit der bestimmten Amplitude den Verstärker (V1) derart zu regeln, dass die Amplitude des angepassten Empfangssignals (E') an einen von der Regel-/Auswerteeinheit (MC) vorgegebenen digitalisierbaren Spannungsbereich angepasst ist.

2. Messgerät nach Anspruch 1,
**dadurch gekennzeichnet,**
**dass** die Regel-/Auswerteeinheit (MC) ein Mikrocontroller ist, welcher das angepasste Empfangssignal (E') über einen Analog-Digital-Wandler (ADC) empfängt.

3. Messgerät nach Anspruch 1 oder 2,
**dadurch gekennzeichnet,**
**dass** zwischen dem regelbaren Verstärker (V1) und der Regel-/Auswerteeinheit (MC) ein Filterelement (BP) angeordnet ist.

4. Messgerät nach einem der Ansprüche 1-3,
**dadurch gekennzeichnet,**
**dass** die Regel-/Auswerteeinheit (MC) einen Digital-Analog-Wandler (DAC) aufweist, welcher der Sende-/Empfangseinheit (SE) das Sendesignal (S) zuführt.

5. Messgerät nach Anspruch 4,
**dadurch gekennzeichnet,**
**dass** zwischen dem Digital-Analog-Wandler (DAC) und der Sende-/Empfangseinheit (SE) ein Verstärker (AMP) mit fest eingestelltem Verstärkungsfaktor angeordnet ist, welcher das Sendesignal (S) verstärkt.

6. Messgerät nach einem der vorangehenden Ansprüche,
**dadurch gekennzeichnet,**
**dass** die Regel-/Auswerteeinheit (MC) ausgestaltet ist, um die Amplitude des Sendesignals (S) in Abhängigkeit der Amplitude des Empfangssignals (E) derart zu regeln, dass die Amplitude des Empfangssignals (E) an den digitalisierbaren Spannungsbereich anpassbar ist.

7. Messgerät nach Anspruch 6,
**dadurch gekennzeichnet,**
**dass** ein zweiter regelbarer Verstärker (V2) zwischen einem Signalausgang der Regel-/Auswerteeinheit (MC) für das Sendesignal (S) und der Sende-/Empfangseinheit (SE) angeordnet ist,
und **dass** die Regel-/Auswerteeinheit (MC) ausgestaltet ist, um den zweiten regelbaren Verstärker (V2) in Abhängigkeit der Amplitude des Empfangssignals (E) derart zu regeln,
**dass** die Amplitude des Empfangssignals (E) durch den ersten Verstärker (V1) an den digitalisierbaren Spannungsbereich anpassbar ist.

8. Messgerät nach einem der vorangehenden Ansprüche,
**dadurch gekennzeichnet,**
**dass** es sich bei der schwingfähigen Einheit um eine Schwinggabel, eine Membran oder einen Einstab handelt.

9. Messgerät nach einem der vorangehenden Ansprüche,
**dadurch gekennzeichnet,**
**dass** es sich bei der Prozessgröße um einen vorbestimmten Füllstand des Mediums in einem Behälter und/oder die Dichte und/oder die Viskosität des Mediums handelt.

## Claims

1. Vibronic measuring device designed to determine at least one process variable of a medium,
with a unit capable of vibrating,
with a transmission/reception unit (SE) designed to excite mechanical vibrations of the unit capable of vibrating by means of a transmission signal (S) and designed to receive the mechanical vibrations and convert the mechanical vibrations into an analog electrical reception signal (E), and
with a control/evaluation unit (MC) designed to receive and digitize the analog reception signal (E) and designed to determine the process variable from the analog reception signal (E) and to generate the transmission signal (S),
**characterized in that**
a controllable amplifier (V1) is arranged between the transmission/reception unit (SE) and the control/evaluation unit (MC), said controllable amplifier (V1) being designed to receive the reception signal (E) and generate an adapted reception signal (E'),
wherein the control/evaluation unit (MC) is designed to determine an amplitude of the reception signal (E) and, depending on the determined amplitude, to regulate the amplifier (V1) in such a way that the amplitude of the adapted reception signal (E') is adapted to a digitizable voltage range, which is specified by the control/evaluation unit (MC).

2. Measuring device as claimed in Claim 1,
**characterized in that**
the control/evaluation unit (MC) is a microcontroller, which receives the adapted reception signal (E') via an analog-to-digital converter (ADC).

3. Measuring device as claimed in Claim 1 or 2,
**characterized in that**
a filter element (BP) is arranged between the controllable amplifier (V1) and the control/evaluation unit (MC).

4. Measuring device as claimed in one of the Claims 1 to 3,
**characterized in that**
the control/evaluation unit (MC) has a digital-to-analog converter (DAC), which supplies the transmission signal (S) to the transmission/reception unit (SE).

5. Measuring device as claimed in Claim 4,
**characterized in that**
an amplifier (AMP) with a fixed amplification factor is arranged between the digital-to-analog converter (DAC), said amplifier amplifying the transmission signal (S).

6. Measuring device as claimed in one of the previous claims,
**characterized in that**
the control/evaluation unit (MC) is designed to control the amplitude of the transmission signal (S) as a function of the amplitude of the reception signal (E) in such a way that the amplitude of the reception signal (E) can be adapted to the digitizable voltage range.

7. Measuring device as claimed in Claim 6,
**characterized in that**
a second controllable amplifier (V2) is arranged between a signal output of the control/evaluation unit (MC) for the transmission signal (S) and the transmission/reception unit (SE),
and **in that** the control/evaluation unit (MC) is designed to regulate the second controllable amplifier (V2) as a function of the amplitude of the reception signal (E) in such a way
that the amplitude of the reception signal (E) can be adapted to the digitizable voltage range by the first amplifier (V1).

8. Measuring device as claimed in one of the previous claims,
**characterized in that**
the unit capable of vibrating is a tuning fork, a membrane or a single rod.

9. Measuring device as claimed in one of the previous claims,
**characterized in that**
the process variable is a predefined level of medium in a container and/or the density and/or the viscosity of the medium.

## Revendications

1. Appareil de mesure vibronique destiné à la détermination d'au moins une grandeur de process d'un produit,
avec une unité apte à vibrer,
avec une unité d'émission / de réception (SE) destinée à l'excitation en vibrations mécaniques de l'unité apte à vibrer au moyen d'un signal d'émission (S) et destinée à la réception des vibrations mécaniques et destinée à la conversion des vibrations mécaniques en un signal de réception électrique analogique (E), et avec une unité de régulation / d'exploitation (MC) destinée à la réception et à la numérisation du signal de réception analogique (E) et destinée à la détermination de la grandeur de process à partir du signal de réception analogique (E) et destinée à la génération du signal d'émission (S),
**caractérisé**
**en ce qu'**est disposé, entre l'unité d'émission / de réception (SE) et l'unité de régulation / d'exploitation (MC), un amplificateur réglable (V1) destiné à la réception du signal de réception (E) et destiné à la génération d'un signal de réception adapté (E'),
l'unité de régulation / d'exploitation (MC) étant conçue de telle sorte à déterminer une amplitude du signal de réception (E) et, en fonction de l'amplitude déterminée, à régler l'amplificateur (V1) de telle sorte que l'amplitude du signal de réception adapté (E') est adaptée à une plage de tension numérisable, prédéfinie par l'unité de régulation / d'exploitation (MC).

2. Appareil de mesure selon la revendication 1,
**caractérisé**
**en ce que** l'unité de régulation / d'exploitation (MC) est un microcontrôleur, lequel reçoit le signal de réception adapté (E') via un convertisseur analogique-numérique (CAN).

3. Appareil de mesure selon la revendication 1 ou 2,
**caractérisé**
**en ce qu'**est disposé un élément de filtre (BP) entre l'amplificateur réglable (V1) et l'unité de régulation / d'exploitation (MC).

4. Appareil de mesure selon l'une des revendications 1 à 3,
**caractérisé**
**en ce que** l'unité de régulation / d'exploitation (MC) comprend un convertisseur numérique-analogique (DAC), lequel achemine le signal d'émission (S) à l'unité d'émission / de réception (SE).

5. Appareil de mesure selon la revendication 4,
**caractérisé**
**en ce qu'**est disposé, entre le convertisseur numérique-analogique (DAC) et l'unité d'émission / de réception (SE), un amplificateur (AMP) avec un facteur d'amplification réglé de façon fixe, lequel amplificateur amplifie le signal d'émission (S).

6. Appareil de mesure selon l'une des revendications précédentes,
**caractérisé**
**en ce que** l'unité de régulation / d'exploitation (MC) est conçue de telle sorte à régler l'amplitude du signal d'émission (S) en fonction de l'amplitude du signal de réception (E), de telle sorte que l'amplitude du signal de réception (E) puisse être adaptée à la plage de tension numérisable.

7. Appareil de mesure selon la revendication 6,
**caractérisé**
**en ce qu'**un deuxième amplificateur réglage (V2) est disposé entre une sortie signal de l'unité de régulation / d'exploitation (MC) pour le signal d'émission (S) et l'unité d'émission / de réception (SE),
et **en ce que** l'unité de régulation / d'exploitation (MC) est conçue de telle sorte à régler le deuxième amplificateur réglable (V2) en fonction de l'amplitude du signal de réception (E) de telle sorte
que l'amplitude du signal de réception (E) puisse être adaptée par le premier amplificateur (V1) à la plage de tension numérisable.

8. Appareil de mesure selon l'une des revendications précédentes,
**caractérisé**
**en ce que**, concernant l'unité apte à vibrer, il s'agit d'une fourche vibrante, d'une membrane ou d'une monotige.

9. Appareil de mesure selon l'une des revendications précédentes,
**caractérisé**
**en ce que**, concernant la grandeur de process, il s'agit d'un niveau prédéterminé du produit dans un réservoir et/ou de la densité et/ou de la viscosité du produit.
